# FASCICULE DE BREVET EUROPEEN

(11) **EP 2 576 188 B1**
(45) Date de publication et mention de la délivrance du brevet: **11.06.2014**
(21) Numéro de dépôt: 11727215.3
(22) Date de dépôt: 17.05.2011
(51) Int. Cl.: B29C 55/14, B29C 55/08

(54) **INSTALLATION POUR L'ÉTIRAGE D'UN FILM EN MATIÈRE SYNTHÉTIQUE**
GERÄT ZUM ZIEHEN EINER FOLIE AUS SYNTHETISCHEM MATERIAL
EQUIPMENT FOR DRAWING A FILM MADE OF SYNTHETIC MATERIAL

(30) Priorité: 02.06.2010 FR 1054289
(43) Date de publication de la demande: 10.04.2013
(73) Titulaire: Darlet, Jean-Pierre, 2100 Shanghai (CN)
(72) Inventeur: Darlet, Jean-Pierre, 2100 Shanghai (CN)
(74) Mandataire: Delorme, Nicolas
(86) Numéro de dépôt international: PCT/FR2011/051097
(87) Numéro de publication internationale: WO 2011/151557

(56) Documents cités:
- JP-A- 11 342 535
- JP-A- 55 105 535
- JP-A- 2003 025 422
- JP-A- 2008 100 456

## Description

La présente invention concerne une installation pour l'étirage de films en matière synthétique dans le sens longitudinal et dans le sens transversal, et plus particulièrement une installation pour l'étirage séquentiel de films en matière synthétique dans laquelle l'étirage dans le sens longitudinal et l'étirage dans le sens transversal ont lieu de façon séquentielle.

Les films de matière synthétique bi-orientés sont obtenus à partir d'un ruban extrudé, après que de la matière à l'état fondu (polypropylène, polyester, polyamide, pvc, etc.) ait été déposée sur un tambour de coulée refroidi par circulation de fluide de façon à ralentir la cristallisation du film et à permettre son étirage ultérieur.

Le ruban extrudé refroidi à une température proche de la température ambiante passe ensuite dans une machine d'étirage longitudinal équipée de cylindres de préchauffage destinés à réchauffer le ruban à la température d'étirage, et d'un train de cylindres entraînés à des vitesses différentes et destinés à étirer longitudinalement le ruban, ce qui a pour effet de réduire, dans la proportion approximative des vitesses, l'épaisseur du ruban.

Le ruban ainsi étiré dans le sens longitudinal pénètre ensuite dans une machine d'étirage transversal qui comporte deux groupes de pinces qui prennent respectivement le ruban sur ses deux côtés, les deux groupes de pinces étant montés sur des chaines dont l'écartement augmente progressivement jusqu'à atteindre la largeur désirée.

Au cours de cette opération, la largeur du ruban, et donc sa surface, sont augmentées considérablement au détriment de son épaisseur. Cette opération ne peut se réaliser qu'à condition que le film et l'ensemble de pinces qui l'accompagne soient maintenus pendant tout l'étirage transversal à la température souhaitée.

Avant d'arriver à l'endroit où les pinces divergent, le ruban étiré dans le sens longitudinal doit avoir atteint dans toute son épaisseur une température homogène, généralement supérieure à la température d'étirage longitudinal.

Après que l'étirage transversal ait été réalisé dans l'enceinte à haute température, il est généralement nécessaire que l'état d'orientation moléculaire qui a été obtenu grâce au double étirage, soit rendu définitif par cristallisation contrôlée du ruban qui doit donc être maintenu par le système de pinces à température élevée pendant tout le temps nécessaire à la réalisation du taux de cristallisation souhaité.

Lorsque cette opération a été réalisée, un dispositif approprié ouvre les pinces et permet au film ainsi constitué d'être transféré, après refroidissement sur un ensemble de cylindres, à un dispositif d'enroulement au niveau duquel le film est enroulé sur un rouleau de stockage.

Cette brève description du dispositif de bi-orientation indique que les granulés plastiques qui ont servi à la réalisation du ruban extrudé, et qui sont généralement stockés à température ambiante, doivent être, dans un premier temps, élevés jusqu'à la température de fusion de façon à être extrudés, puis refroidis brutalement pour éviter la cristallisation, puis réchauffés à la température d'étirage longitudinal, élevés à nouveau jusqu'à la température d'étirage transversal, et maintenus à la température de cristallisation pendant le temps nécessaire. Ce processus est donc éminemment consommateur d'énergie, compte tenu de ses phases successives d'échauffement et de refroidissement.

Une ligne moderne de production de film bi-orienté correspond à des débits pouvant atteindre 5 000 et 6 000 kg par heure de production, et des largeurs de film atteignant 9, 10, et parfois plus, mètres de largeur.

Par ailleurs, les contraintes économiques visent à augmenter considérablement la vitesse des machines de façon à réduire le montant des investissements par kg de film produit. Cette augmentation de vitesse se traduit par l'allongement des machines d'étirage, et tout particulièrement de la machine d'étirage transversal, qui voit de ce fait la consommation d'énergie augmenter de façon considérable.

Ce phénomène est aggravé par le fait qu'il est nécessaire d'introduire dans les films plastiques les plus couramment utilisés pour l'emballage, des additifs destinés à améliorer les caractéristiques des films produits en les rendant moins susceptibles de générer de l'électricité statique et améliorer le glissant des films.

Ces additifs, qui sont incorporés aux granulés au moment de l'extrusion, présentent en général l'inconvénient de s'évaporer lorsque le ruban qui les contient est porté aux températures nécessaires pour l'étirage, et en particulier dans la machine d'étirage transversal, où cette évaporation est facilitée par l'augmentation de surface qui résulte de l'étirage transversal.

Ces additifs évaporés du film se mélangent donc à l'air chaud utilisé pour maintenir en température le film dans la machine d'étirage transversal, et leur concentration dans cet air augmente donc rapidement au fur et à mesure de la production. Ils ont tendance bien entendu à se condenser sur les parties froides de la machine, sous forme de produits liquides visqueux qui présentent de graves inconvénients à la fois sur le film lorsqu'ils se déposent sous forme de gouttelettes créant des ruptures de film, ou des taches noires inacceptables notamment pour la production de film destiné à l'emballage de produits alimentaires.

Il est donc nécessaire, pour éviter que la concentration des vapeurs dans l'air de circulation de la machine d'étirage transversal n'augmente jusqu'à rendre incompatible avec la production, les condensations et dépôts de gouttelettes, de retirer une partie du volume d'air en circulation dans l'enceinte de la machine d'étirage transversal et de le remplacer par de l'air propre qui devra, au préalable, être réchauffé à la température de la machine d'étirage transversal de façon à éviter le refroidissement de celle-ci, et les condensations qui un résulteraient. Les proportions d'air à évacuer sont comprises entre 5 et 45 %, plus généralement entre 10 et 25 %, de l'air chaud en circulation dans le four, et représentent de ce fait une dépense d'énergie considérable puisqu'il faut remplacer ce volume évacué par de l'air propre, préalablement réchauffé à la température souhaitée.

Cette dépense d'énergie, qui n'est pas directement liée aux impératifs du procédé mais à la nécessité d'éviter la condensation de produits indésirables, représente un coût important et qui devient inacceptable, quelles que soient les énergies utilisées pour le maintien en température des organes de la machine, et qui sont soit l'énergie électrique, soit l'énergie transportée par un fluide caloporteur produit par une chaudière à fuel ou gaz, soit enfin par l'utilisation d'un chauffage au gaz direct dans la veine d'air à réchauffer.

La récupération des quantités importantes d'énergie que représente le volume d'air chaud extrait en continu de la machine d'étirage transversal représente donc un objectif économique important et pour lequel il n'existe pas, à l'heure actuelle, de solution satisfaisante, puisque des dispositifs d'échangeur air/air, qui permettraient de transférer à l'air propre injecté dans le four une partie de l'énergie nécessaire pour réchauffer l'air propre de remplacement, ont tendance, pour les raisons indiquées ci-dessus, à être pollués très rapidement par la condensation sur les parties froides de l'échangeur des produits indésirables. Ceux-ci se présentent sous forme de croûte visqueuse, dure, difficile à nettoyer, qui rende, après quelques semaines, les échangeurs inopérants.

Une dépense d'énergie également importante tient, celle-ci, aux nécessités du procédé et résulte de la nécessité de réchauffer, avant la partie d'étirage longitudinal, le ruban précédemment refroidi de façon à lui permettre d'atteindre la température d'étirage longitudinal.

A cet effet, le ruban extrudé, préalablement refroidi sur le tambour de coulée, passe sur un ensemble de cylindres de préchauffage réchauffés par circulation d'huile chaude. L'augmentation de vitesse des machines se traduit proportionnellement par l'augmentation du nombre de cylindres de préchauffage pour réchauffer le film, et se traduit de ce fait par des dépenses d'équipement et d'énergie croissantes.

De la même façon, l'opération de refroidissement du ruban extrudé sur le tambour de coulée se traduit par des dépenses d'énergie considérables. Il est en effet nécessaire que soit installé un groupe froid dont la capacité calorifique corresponde au minimum aux calories qui doivent être évacuées rapidement du film pour sa cristallisation.

La nécessité que ce refroidissement s'effectue de façon rapide, symétrique des deux côtés du film, et avec une très grande homogénéité de température sur la largeur du ruban, implique que circulent dans le tambour de refroidissement et dans le bac à eau qui l'entoure des quantités importantes d'eau qui doivent donc être mises en vitesse de façon à faciliter l'échange grâce à des pompes de grandes dimensions, elles aussi très consommatrices d'énergie.

L'ensemble de ces considérations, qui correspondent à l'état actuel de la technologie, font que les dépenses d'énergie qui correspondent à la fabrication de film bi-orienté sur des machines de grand débit constituent à ce jour une part importante et croissante des coûts de fabrication des films bi-orientés.

Le document japonais JP-A-55105535 divulgue une installation pour l'étirage d'un film en matière synthétique selon le préambule de la revendication 1.

La présente invention vise à remédier à ces inconvénients.

Le problème technique à la base de l'invention consiste donc à fournir un dispositif mécanique pour l'étirage d'un film en matière synthétique qui soit de structure simple et économique, et qui permette d'améliorer la qualité du film produit, tout en réduisant dans des proportions considérables les dépenses d'énergie nécessaires pour la production de ce film.

A cet effet, la présente invention concerne installation pour l'étirage d'un film en matière synthétique dans le sens longitudinal et dans le sens transversal, comprenant des moyens d'étirage transversal agencés pour étirer transversalement le film, les moyens d'étirage transversal comportant une enceinte d'étirage dans laquelle est destiné à être étiré le film, une ouverture de sortie d'air débouchant dans l'enceinte et une ouverture d'entrée d'air débouchant dans l'enceinte, caractérisée en ce que les moyens d'étirage transversal comportent en outre un circuit de recirculation d'air reliant les ouvertures d'entrée et de sortie d'air et agencé pour rediriger l'air provenant de l'ouverture de sortie d'air vers l'ouverture d'entrée d'air, et en ce que le circuit de recirculation d'air comporte un dispositif de séparation à cyclone comprenant un corps délimitant une chambre de séparation, un orifice d'entrée débouchant dans la chambre de séparation et relié à l'ouverture de sortie d'air de l'enceinte de manière à permettre l'introduction d'un mélange air-additifs dans la chambre de séparation, un orifice de sortie d'air débouchant dans la chambre de séparation et relié à l'ouverture d'entrée d'air de l'enceinte, et un orifice de sortie d'additifs débouchant dans la chambre de séparation.

L'utilisation d'un dispositif de séparation à cyclone disposé sur un tel circuit de recirculation de fluide permet de parfaitement nettoyer le volume d'air chaud extrait de l'enceinte des moyens d'étirage transversal, avant de le réinjecter dans cette dernière. En effet, de par la configuration de la chambre de séparation d'un dispositif de séparation à cyclone, le mélange air-additifs pénétrant dans la chambre de séparation se met à tourner le long de la paroi interne de la chambre de séparation, ce qui provoque la centrifugation du mélange air-additifs. Il en résulte la coalescence des gouttes d'additifs sur la paroi interne de la chambre de séparation, puis la chute par gravité des additifs vers l'orifice de sortie d'additifs, et l'écoulement de l'air dépourvu d'additifs par l'orifice de sortie d'air.

En outre, le fait que l'air sortant du dispositif de séparation à cyclone présente une température élevée permet de limiter les dépenses énergétiques nécessaires pour relever la température de cet air avant sa réintroduction dans l'enceinte d'étirage, et donc de limiter les dépenses énergétiques de l'installation.

Il doit être noté que l'on entend par « additifs », les additifs incorporés aux granulés au moment de l'extrusion et évaporés durant l'étirage transversal, ainsi que les vapeurs issues de ces additifs lors de l'étirage transversal.

Il convient également de noter que l'enceinte d'étirage forme avantageusement un four d'étirage.

Avantageusement, le dispositif de séparation à cyclone comprend un dispositif d'injection de liquide agencé pour injecter un liquide à l'intérieur du corps du dispositif de séparation à cyclone et conçu de telle sorte que le liquide injecté forme une couche de liquide sur au moins une portion de la paroi interne du corps du dispositif de séparation à cyclone. La présence d'une telle couche de liquide sur la paroi interne du corps du dispositif de séparation à cyclone permet de piéger les particules d'additifs et de faciliter leur évacuation en direction de l'orifice de sortie d'additifs, ce qui protège le dispositif de séparation à cyclone de l'encrassement. Selon un mode de réalisation de l'invention, le dispositif d'injection de liquide comporte au moins une buse de pulvérisation disposée dans le corps du dispositif de séparation à cyclone. Avantageusement, le dispositif d'injection de liquide peut être un générateur de brouillard, par exemple de brouillard d'eau, agencé pour générer et injecter un brouillard à l'intérieur du corps du dispositif de séparation à cyclone.

De préférence, l'installation comprend un premier circuit de circulation de fluide dans lequel circule un fluide caloporteur, le corps du dispositif de séparation à cyclone comprend une entrée de fluide caloporteur et une sortie de fluide caloporteur raccordées au premier circuit de circulation de fluide, et le dispositif de séparation à cyclone comprend un tuyau de refroidissement disposé dans le corps du dispositif de séparation à cyclone et comportant une première extrémité raccordée à l'entrée de fluide caloporteur et une seconde extrémité raccordée à la sortie de fluide caloporteur. Ces dispositions assurent un échauffement du fluide caloporteur circulant dans le premier circuit de circulation de fluide lors de son passage dans le tuyau de refroidissement, qui est chauffé par l'air chaud traversant le dispositif de séparation à cyclone. Ce fluide caloporteur, chauffé à une température proche de la température de l'air extrait de l'enceinte d'étirage, peut avantageusement être utilisé dans d'autres zones de l'installation nécessitant un chauffage du film à étirer. De ce fait, l'installation selon l'invention permet la récupération quasi-totale de l'énergie contenue dans l'air extrait de l'enceinte d'étirage.

Il doit être noté que l'énergie cinétique provenant du mouvement tourbillonnaire de l'air à l'intérieur du corps évite que les particules d'additifs se condensent sur le tuyau de refroidissement, qui de ce fait reste propre.

Selon un mode de réalisation, le tuyau de refroidissement disposé à l'intérieur du corps du dispositif de séparation à cyclone se présente sous la forme d'un serpentin.

De façon avantageuse, l'installation comprend des premiers moyens de chauffage disposés en amont des moyens d'étirage transversal et destinés à chauffer le film, les premiers moyens de chauffage étant raccordés au premier circuit de circulation de fluide.

Préférentiellement, le fluide caloporteur circulant dans le premier circuit de circulation de fluide est de l'eau, et les premiers moyens de chauffage comportent un bac à eau chaude équipé d'un orifice d'entrée et d'un orifice de sortie raccordés au premier circuit de circulation de fluide. Un tel bac à eau chaude permet de réchauffer le film préalablement refroidi en sortie du tambour de coulée en utilisant des moyens mécaniques simples et l'eau chauffée récupérée à la sortie du dispositif de séparation à cyclone.

De façon avantageuse, l'installation comprend des moyens d'étirage longitudinal agencés pour étirer longitudinalement le film, les moyens d'étirage longitudinal comprenant de préférence un ensemble de cylindres de préchauffage, et un groupe d'étirage disposé en aval de l'ensemble de cylindres de préchauffage et présentant une succession de cylindres d'étirage. Les moyens d'étirage longitudinal sont par exemple disposés en amont des moyens d'étirage transversal lorsque l'installation est une installation d'étirage séquentiel.

Avantageusement, les premiers moyens de chauffage sont disposés en amont des moyens d'étirage longitudinal.

La présence de moyens de chauffage, tels qu'un bac à eau chaude, en amont des moyens d'étirage longitudinal permet, outre le fait de récupérer de l'énergie calorifique à partir de l'air extrait de l'enceinte d'étirage, de réduire considérablement le nombre de cylindres de préchauffage nécessaires à l'entrée de la machine d'étirage longitudinal, réduisant ainsi fortement son coût.

Le passage du ruban extrudé dans un tel bac à eau présente également l'intérêt de faciliter le séchage du ruban extrudé, indispensable avant que celui-ci ne soit amené au contact des cylindres de préchauffage de la machine d'étirage longitudinal. En effet, sur les machines à grande vitesse, le séchage du film, lorsqu'il se fait à la sortie du bac à eau froide, présente l'inconvénient de nécessiter l'utilisation de flux d'air à grande vitesse, donc de ventilateurs eux-mêmes consommateurs d'énergie électrique importante. Au contraire, selon l'invention, le séchage est grandement facilité grâce à la réduction de l'énergie de tension superficielle qui réduit l'adhésion des gouttelettes d'eau sur le ruban extrudé, et qui contribue lui-même, grâce à sa température interne, à l'évacuation de l'eau.

Selon un mode de réalisation, l'installation comprend une hotte s'étendant au moins au dessus des moyens d'étirage longitudinal et conçue pour recueillir l'air ambiant chauffer au moins en partie par ces derniers et diriger ce dernier en direction des moyens d'étirage transversal.

Avantageusement, l'installation comprend des deuxièmes moyens de chauffage disposés entre l'orifice de sortie d'air du dispositif de séparation à cyclone et l'ouverture d'entrée d'air de l'enceinte, lesdits moyens de chauffage comportant par exemple un échangeur ou un brûleur à gaz.

De préférence, les deuxièmes moyens de chauffage disposés entre l'orifice de sortie d'air du dispositif de séparation à cyclone et l'ouverture d'entrée d'air de l'enceinte comportent un brûleur à gaz équipé d'un collecteur d'air disposé dans une zone de la hotte située à proximité des moyens d'étirage transversal. Ainsi, l'air ambiant chaud recueilli par la hotte, dont la température atteint 50-60°C, est utilisé pour l'alimentation en oxygène du brûleur à gaz. Les calories utilisées de cette façon réduisent d'autant la consommation en gaz du brûleur destiné à réchauffer l'air introduit dans l'enceinte d'étirage.

Avantageusement, l'installation comporte un deuxième circuit de circulation de fluide dans lequel circule un fluide caloporteur, et le circuit de recirculation d'air comporte au moins un échangeur air / fluide caloporteur disposé entre l'ouverture de sortie d'air de l'enceinte et le dispositif de séparation à cyclone, l'échangeur comportant une entrée de fluide caloporteur et une sortie de fluide caloporteur raccordées au deuxième circuit de circulation de fluide.

De façon préférentielle, le deuxième circuit de circulation de fluide est agencé pour alimenter en fluide caloporteur les cylindres de préchauffage des moyens d'étirage longitudinal. Ainsi, le fluide caloporteur, échauffé lors de son passage dans l'échangeur, est utilisé directement comme fluide caloporteur à l'intérieur des cylindres de préchauffage pour maintenir en température ces derniers, ce qui permet une réutilisation optimale de l'énergie extraite de l'air extrait de l'enceinte d'étirage.

L'échangeur est de préférence configuré de telle sorte que l'air sortant de ce dernier présente une température supérieure à la température de condensation des additifs, ce qui permet d'éviter une condensation d'additifs sur l'échangeur et donc un encrassement de ce dernier.

De toute façon l'invention sera bien comprise à l'aide de la description qui suit en référence au dessin schématique annexé représentant, à titre d'exemples non limitatifs, plusieurs formes d'exécution de cette installation.
Figure 1 est une vue d'ensemble schématique, de côté, d'une ligne de production d'un film en matière synthétique comportant une installation d'étirage selon un premier mode de réalisation de l'invention ;

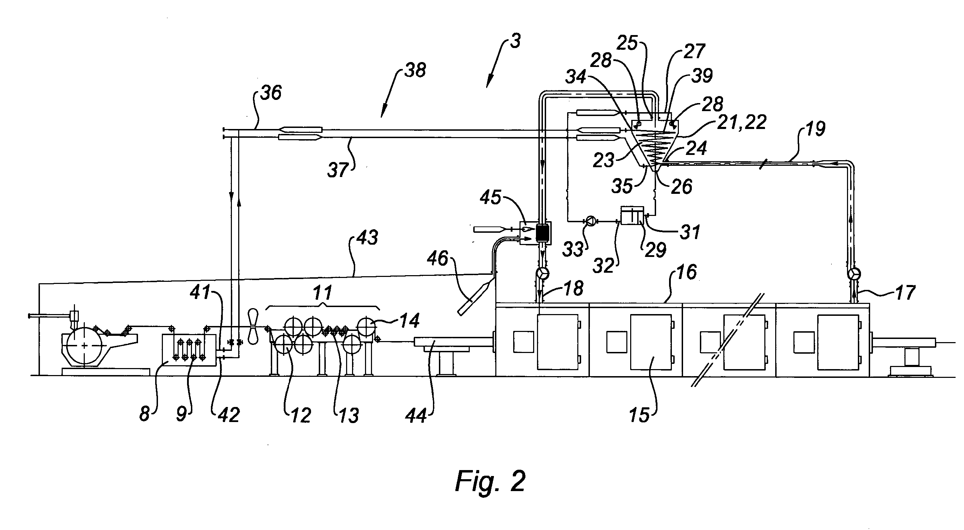

Figure 2 est une vue partielle schématique, à l'échelle agrandie, de l'installation d'étirage de la figure 1 ;
Figure 3 est une vue d'ensemble schématique, de côté, d'une installation d'étirage selon un deuxième mode de réalisation de l'invention ;
Figure 4 est une vue d'ensemble schématique, de côté, d'une installation d'étirage selon un troisième mode de réalisation de l'invention.

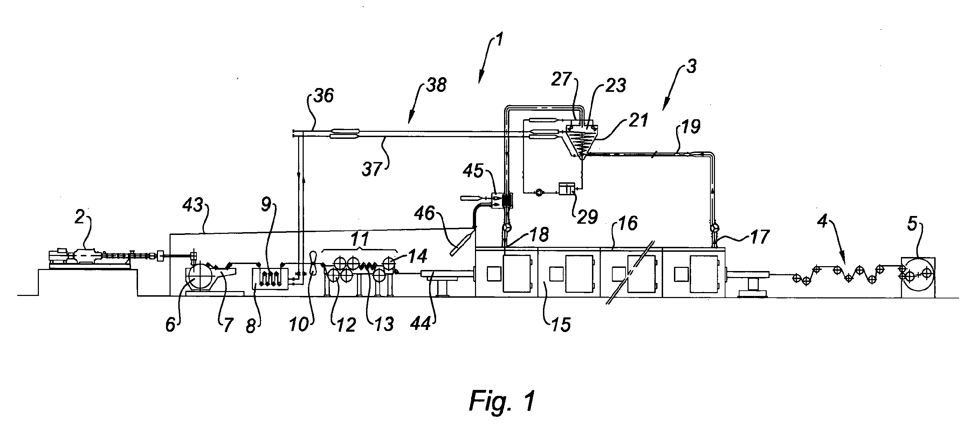

La figure 1 représente une ligne de production 1 d'un film en matière synthétique comportant une extrudeuse 2, une installation 3 pour l'étirage séquentielle d'un film en matière synthétique dans le sens longitudinal et dans le sens transversal, un ensemble de cylindres de traitement 4 et un dispositif d'enroulement 5.

L'installation 3 comprend d'amont en aval (par référence au sens de défilement du film à étirer) :
- un tambour de coulée 6,
- un bac à eau froide 7,
- un bac à eau chaude 8 muni de préférence de cylindres de détour 9,
- un dispositif de séchage 10,
- une machine d'étirage longitudinal 11 comportant un ensemble de cylindres de préchauffage 12, un groupe d'étirage 13 disposé en aval de l'ensemble de cylindres de préchauffage et présentant une succession de cylindres d'étirage, et un groupe de thermostabilisation 14 disposé en aval du groupe d'étirage 13 et présentant une succession de cylindres dont la fonction est d'assurer la détente thermique et la stabilisation du film, avant l'étirage transversal subséquent de ce film,
- une machine d'étirage transversal 15.

La machine d'étirage transversal 15 comporte une enceinte d'étirage 16 dans laquelle est destiné à être étiré transversalement le film, une ouverture de sortie d'air 17 débouchant dans l'enceinte d'étirage 16 et une ouverture d'entrée d'air 18 débouchant dans l'enceinte d'étirage 16.

La machine d'étirage transversal 15 comporte en outre un circuit de recirculation d'air 19 raccordant les ouvertures d'entrée et de sortie d'air 18, 17 et agencé pour rediriger l'air provenant de l'ouverture de sortie d'air 17 vers l'ouverture d'entrée d'air 18.

Le circuit de recirculation d'air 19 comporte un dispositif de séparation à cyclone 21 comprenant un corps 22 délimitant une chambre de séparation 23. La chambre de séparation 23 comporte une portion supérieure cylindrique prolongée par une portion inférieure tronconique convergeant à l'opposé de la portion supérieure.

Le dispositif de séparation à cyclone 21 comporte en outre un orifice d'entrée 24 débouchant tangentiellement dans la chambre de séparation 23 et relié à l'ouverture de sortie d'air 17 de l'enceinte 16 de manière à permettre l'introduction d'un mélange air-additifs dans la chambre de séparation 23.

Le dispositif de séparation à cyclone 21 comporte de plus un orifice de sortie d'air 25 débouchant axialement dans la portion supérieure de la chambre de séparation et relié à l'ouverture d'entrée d'air 18 de l'enceinte 16, et un orifice de sortie d'additifs 26 débouchant dans l'extrémité inférieure de la chambre de séparation 23.

Le dispositif de séparation à cyclone 21 comprend un dispositif d'injection de liquide 27 agencé pour injecter un liquide à l'intérieur du corps 22 du dispositif de séparation à cyclone 21 et conçu de telle sorte que le liquide injecté forme une couche de liquide sur au moins une portion de la paroi interne du corps 22 du dispositif de séparation à cyclone 21. Le dispositif d'injection de liquide 27 peut être, selon un mode de réalisation, un générateur de brouillard, par exemple de brouillard d'eau, agencé pour générer et injecter un brouillard à l'intérieur du corps du dispositif de séparation à cyclone. Avantageusement, le dispositif d'injection de liquide 27 comporte au moins deux buses de pulvérisation 28 disposée dans le corps 22 du dispositif de séparation à cyclone 21.

De préférence, l'installation comporte un décanteur 29 comprenant un orifice d'entrée 31 relié à l'orifice de sortie d'additifs 26 et un orifice de sortie 32 relié au dispositif d'injection de liquide 27 via une pompe 33. Le décanteur 29 est destiné à séparer le liquide injecté dans le corps 22 par le dispositif d'injection de liquide 27 et les additifs séparés dans la chambre de séparation 23. Il convient de noter que le décanteur 29 pourrait être remplacé par un filtre destiné à piéger les additifs et que le liquide injecté dans le dispositif de séparation 21 par le dispositif d'injection de liquide 27 circule de préférence en circuit fermé.

Le corps 22 du dispositif de séparation à cyclone 21 comprend une entrée de fluide caloporteur 34 et une sortie de fluide caloporteur 35 raccordées respectivement aux conduites d'amenée de fluide 36 et de retour de fluide 37 d'un premier circuit de circulation de fluide 38 dans lesquelles est destiné à circuler un fluide caloporteur, qui est de l'eau selon le mode de réalisation représenté sur la figure 1.

Le dispositif de séparation à cyclone 21 comprend également un tuyau de refroidissement 39 disposé dans le corps 22 du dispositif de séparation à cyclone 21 et se présentant sous la forme d'un serpentin. Le tuyau de refroidissement 39 comporte une première extrémité raccordée à l'entrée de fluide caloporteur 34 et une seconde extrémité raccordée à la sortie de fluide caloporteur 35. Le dispositif de séparation à cyclone 21 forme ainsi un échangeur cyclonique.

Il convient de noter que le bac à eau chaude 8 est équipé d'un orifice d'entrée 41 et d'un orifice de sortie 42 qui sont respectivement raccordés aux conduites de retour de fluide 37 et d'amenée de fluide 36 du premier circuit de circulation de fluide 38.

L'installation 3 comprend une hotte 43 s'étendant au dessus du tambour de coulée 6, du bac à eau chaude 8, de la machine d'étirage longitudinal 11 et de la portion d'entrée 44 de la machine d'étirage transversal 13. La hotte 43 présente avantageusement une portion supérieure inclinée et est conçue pour recueillir l'air ambiant, chauffé par les différents éléments de l'installation recouverts par la hotte, qui s'élève par convection et diriger cet air chauffé en direction de la portion d'entrée 44 de la machine d'étirage transversal 13.

Le circuit de recirculation d'air 19 comporte des moyens de chauffage disposés entre l'orifice de sortie d'air 25 du dispositif de séparation à cyclone 21 et l'ouverture d'entrée d'air 18 de l'enceinte 16. Selon le mode de réalisation représenté sur la figure 1, les moyens de chauffage comportent un brûleur à gaz 45 équipé d'un collecteur d'air 46 disposé dans une zone de la hotte 43 située à proximité de la portion d'entrée 44 de la machine d'étirage transversal.

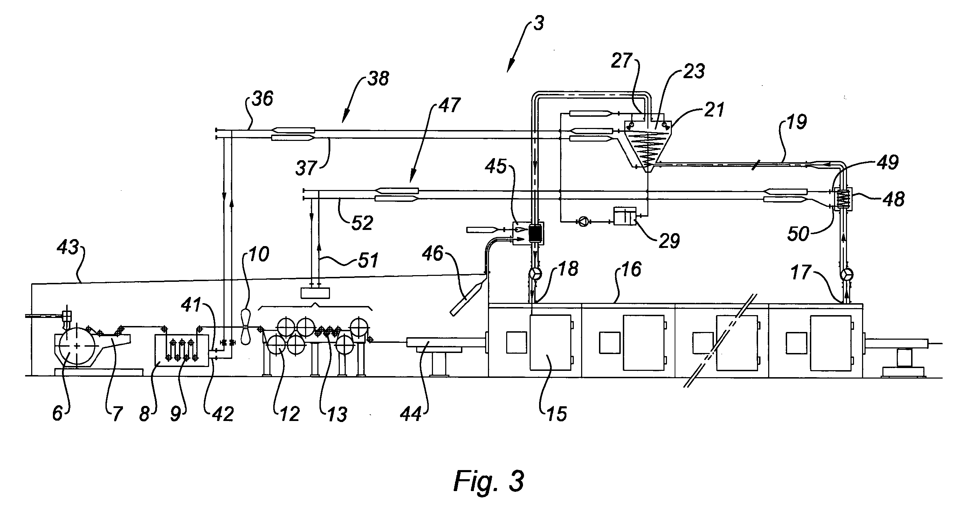

La figure 3 représente une installation 3 pour l'étirage séquentielle d'un film en matière synthétique selon un deuxième mode de réalisation qui diffère de celui représenté sur la figure 1 essentiellement en ce que l'installation comporte un deuxième circuit de circulation de fluide 47 dans lequel circule un fluide caloporteur, et en ce que le circuit de recirculation d'air 19 comporte un échangeur air / fluide caloporteur 48 disposé entre l'ouverture de sortie d'air 17 de l'enceinte 16 et le dispositif de séparation à cyclone 21, l'échangeur 48 comportant une entrée de fluide caloporteur 49 et une sortie de fluide caloporteur 50 raccordées respectivement aux conduites d'amenée de fluide et de retour de fluide 51, 52 du deuxième circuit de circulation de fluide 46.

Le deuxième circuit de circulation de fluide 47 est agencé pour alimenter en fluide caloporteur les cylindres de préchauffage 12 de la machine d'étirage longitudinal 11. Le fluide caloporteur circulant dans le deuxième circuit de circulation de fluide 47 est de préférence de l'huile.

L'échangeur 48 est de préférence dimensionné de telle sorte que l'air sortant de ce dernier présente une température supérieure à la température de condensation des additifs, et de préférence supérieure de 5 à 10 °C de la température de condensation des additifs. Par exemple, dans le cas du polypropylène, la température de l'air dans l'échangeur 48 peut atteindre 170°C et la température de sortie de l'air de l'échangeur ne peut pas être inférieure à 120°C pour éviter la condensation.

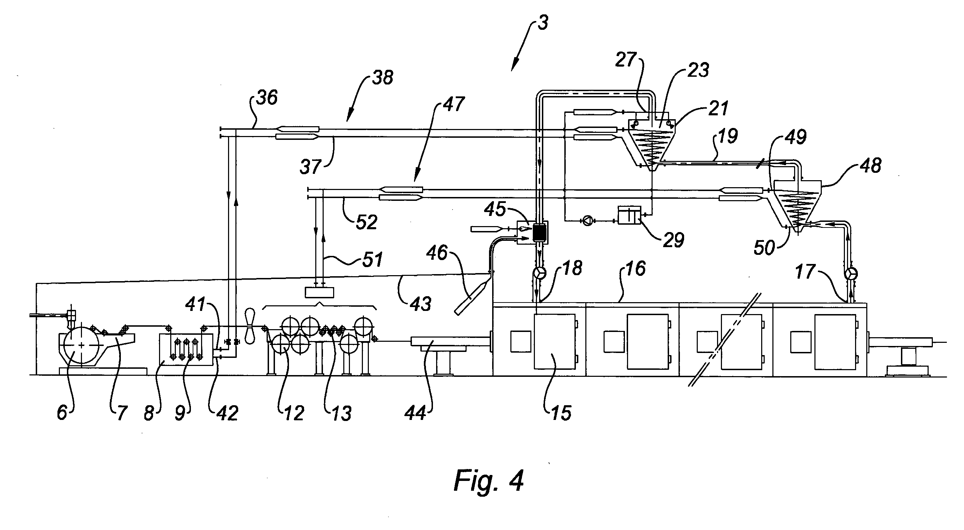

La figure 4 représente une installation 3 pour l'étirage séquentielle d'un film en matière synthétique selon un troisième mode de réalisation qui diffère de celui représenté sur la figure 3 essentiellement en ce que l'échangeur 48 disposé entre l'ouverture de sortie d'air 17 de l'enceinte 16 et le dispositif de séparation à cyclone 21 est un échangeur cyclonique.

L'efficacité, sur le plan de la récupération de l'énergie, des différentes installations décrites ci-dessus, permet, sans inconvénient économique, d'augmenter la quantité d'air extrait de la machine d'étirage transversal au-delà des 10 à 15 % actuellement utilisés, ce qui présente l'avantage d'un degré de propreté supérieur de l'air en circulation à l'intérieur de la machine d'étirage transversal, et donc l'élimination complète des condensations internes à cette machine. Il en résulte le double avantage d'améliorer la qualité des films produits, et également d'éviter le dépôt de ces condensations sur les organes mécaniques sensibles que sont, à l'intérieur de l'enceinte d'étirage, les chaines, les pinces, et les rails qui y circulent. Ces dépôts sont, dans les machines classiques, c'est-à-dire non équipés des dispositifs décrits ci-dessus, par leur simple présence, de nature à empêcher la lubrification nécessaire de ces organes mécaniques, ce qui se traduit par des incidents graves et une réduction de la durée de vie de ces organes.

Comme il va de soi, l'invention ne se limite pas aux seules formes d'exécution de cette installation, décrites ci-dessus à titre d'exemples, elle en embrasse au contraire toutes les variantes de réalisation. C'est ainsi notamment que l'installation pourrait être une installation pour l'étirage simultané de films en matière synthétique dans laquelle l'étirage dans le sens longitudinal et l'étirage dans le sens transversal ont lieu de façon simultanée.

## Revendications

1. Installation (3) pour l'étirage d'un film en matière synthétique, comprenant des moyens d'étirage transversal (15) agencés pour étirer transversalement le film, les moyens d'étirage transversal comportant une enceinte d'étirage (16) dans laquelle est destiné à être étiré le film, une ouverture de sortie d'air (17) débouchant dans l'enceinte et une ouverture d'entrée d'air (18) débouchant dans l'enceinte, dans laquelle installation les moyens d'étirage transversal comportent en outre un circuit de recirculation d'air (19) reliant les ouvertures d'entrée et de sortie d'air (18, 17) et agencé pour rediriger l'air provenant de l'ouverture de sortie d'air vers l'ouverture d'entrée d'air, et le circuit de recirculation d'air (19) comporte un dispositif de séparation à cyclone (21) comprenant un corps (22) délimitant une chambre de séparation (23), un orifice d'entrée (24) débouchant dans la chambre de séparation et relié à l'ouverture de sortie d'air (17) de l'enceinte de manière à permettre l'introduction d'un mélange air-additifs dans la chambre de séparation, un orifice de sortie d'air (25) débouchant dans la chambre de séparation et relié à l'ouverture d'entrée d'air (18) de l'enceinte, et un orifice de sortie d'additifs (26) débouchant dans la chambre de séparation.

2. Installation selon la revendication 1, **caractérisée en ce que** le dispositif de séparation à cyclone (21) comprend un dispositif d'injection de liquide (27) agencé pour injecter un liquide à l'intérieur du corps (22) du dispositif de séparation à cyclone et conçu de telle sorte que le liquide injecté forme une couche de liquide sur au moins une portion de la paroi interne du corps du dispositif de séparation à cyclone.

3. Installation selon la revendication 2, **caractérisée en ce que** le dispositif d'injection de liquide (27) est un générateur de brouillard, par exemple de brouillard d'eau, agencé pour générer et injecter un brouillard à l'intérieur du corps du dispositif de séparation à cyclone.

4. Installation selon l'une des revendications 1 à 3, **caractérisée en ce qu'**elle comprend un premier circuit de circulation de fluide (38) dans lequel circule un fluide caloporteur, **en ce que** le corps (22) du dispositif de séparation à cyclone (21) comprend une entrée de fluide caloporteur (34) et une sortie de fluide caloporteur (35) raccordées au premier circuit de circulation de fluide (38), et **en ce que** le dispositif de séparation à cyclone (21) comprend un tuyau de refroidissement (39) disposé dans le corps du dispositif de séparation à cyclone et comportant une première extrémité raccordée à l'entrée de fluide caloporteur (34) et une seconde extrémité raccordée à la sortie de fluide caloporteur (35).

5. Installation selon la revendication 4, **caractérisée en ce que** le tuyau de refroidissement (39) disposé à l'intérieur du corps du dispositif de séparation à cyclone (21) se présente sous la forme d'un serpentin.

6. Installation selon la revendication 4 ou 5, **caractérisée en ce qu'**elle comprend des premiers moyens de chauffage (8) disposés en amont des moyens d'étirage transversal (15) et destinés à chauffer le film, les premiers moyens de chauffage étant raccordés au premier circuit de circulation de fluide (38).

7. Installation selon la revendication 6, **caractérisée en ce que** le fluide caloporteur circulant dans le premier circuit de circulation de fluide (38) est de l'eau, et **en ce que** les premiers moyens de chauffage comportent un bac à eau chaude (8) équipé d'un orifice d'entrée (41) et d'un orifice de sortie (42) raccordés au premier circuit de circulation de fluide (38).

8. Installation selon l'une des revendications 1 à 7, **caractérisée en ce qu'**elle comprend des moyens d'étirage longitudinal (11) agencés pour étirer longitudinalement le film, les moyens d'étirage longitudinal (11) comprenant de préférence un ensemble de cylindres de préchauffage (12) et un groupe d'étirage (13) disposé en aval de l'ensemble de cylindres de préchauffage et présentant une succession de cylindres d'étirage.

9. Installation selon la revendication 8, **caractérisée en ce qu'**elle comprend une hotte (43) s'étendant au moins au dessus des moyens d'étirage longitudinal (11) et conçue pour recueillir l'air ambiant chauffer au moins en partie par les moyens d'étirage longitudinal et diriger ce dernier en direction des moyens d'étirage transversal (15).

10. Installation selon l'une des revendications 1 à 9, **caractérisée en ce qu'**elle comprend des deuxièmes moyens de chauffage (45) disposés entre l'orifice de sortie d'air (25) du dispositif de séparation à cyclone (21) et l'ouverture d'entrée d'air (18) de l'enceinte, lesdits moyens de chauffage comportant par exemple un échangeur ou un brûleur à gaz.

11. Installation selon les revendication 9 et 10, **caractérisée en ce que** les deuxièmes moyens de chauffage disposés entre l'orifice de sortie d'air du dispositif de séparation à cyclone et l'ouverture d'entrée d'air de l'enceinte comportent un brûleur à gaz (45) équipé d'un collecteur d'air (46) disposé dans une zone de la hotte (43) située à proximité des moyens d'étirage transversal.

12. Installation selon l'une des revendications 1 à 11, **caractérisée en ce qu'**elle comporte un deuxième circuit de circulation de fluide (46) dans lequel circule un fluide caloporteur, et **en ce que** le circuit de recirculation d'air (19) comporte au moins un échangeur air / fluide caloporteur (47) disposé entre l'ouverture de sortie d'air (17) de l'enceinte et le dispositif de séparation à cyclone (21), l'échangeur (47) comportant une entrée de fluide caloporteur (48) et une sortie de fluide caloporteur (49) raccordées au deuxième circuit de circulation de fluide (46).

13. Installation selon la revendication 12, **caractérisée en ce que** l'échangeur (47) est configuré de telle sorte que l'air sortant de ce dernier présente une température supérieure à la température de condensation des additifs.

14. Installation selon la revendication 12 ou 13, **caractérisée en ce que** l'échangeur (47) est un échangeur cyclonique.

15. Installation selon la revendication 8 et l'une des revendications 12 à 14, **caractérisée en ce que** les moyens d'étirage longitudinal (11) comprennent un ensemble de cylindres de préchauffage (12) et un groupe d'étirage (13) disposé en aval de l'ensemble de cylindres de préchauffage et présentant une succession de cylindres d'étirage, et **en ce que** le deuxième circuit de circulation de fluide (46) est agencé pour alimenter en fluide caloporteur les cylindres de préchauffage (12) des moyens d'étirage longitudinal.

## Patentansprüche

1. Einrichtung (3) zur Streckung einer Folie aus synthetischem Material, umfassend Mittel zur Querstreckung (15), die angeordnet sind, um die Folie quer zu strecken, wobei die Mittel zur Querstreckung ein Streckungsgehäuse (16) umfassen, in dem die Streckung der Folie vorgesehen ist, wobei eine Luftausgangsöffnung (17) im Gehäuse mündet und eine Lufteingangsöffnung (18) im Gehäuse mündet, wobei in dieser Einrichtung die Mittel zur Querstreckung außerdem einen Luftrückführungskreislauf (19) umfassen, der die Lufteingangs- und die Luftausgangsöffnung (18, 17) miteinander verbindet und angeordnet ist, um die Luft, die von der Luftausgangsöffnung stammt, zur Lufteingangsöffnung umzuleiten, und der Luftrückführungskreislauf (19) eine Vorrichtung zur Zyklonabscheidung (21) umfasst, umfassend einen Körper (22), der eine Abscheidekammer (23) begrenzt, ein Eingangsloch (24), das in der Abscheidekammer mündet und mit der Luftausgangsöffnung (17) des Gehäuses verbunden ist, um die Einführung einer Mischung aus Luft und Zusatzstoffen in die Abscheidekammer zu ermöglichen, ein Luftausgangsloch (25), das in der Abscheidekammer mündet und mit der Lufteingangsöffnung (18) des Gehäuses verbunden ist, und eine Zusatzstoff-Ausgangsöffnung (26), die in der Abscheidekammer mündet.

2. Einrichtung nach Anspruch 1, **dadurch gekennzeichnet, dass** die Vorrichtung zur Zyklonabscheidung (21) eine Vorrichtung zur Injektion von Flüssigkeit (27) umfasst, die angeordnet ist, um eine Flüssigkeit in das Innere des Körpers (22) der Vorrichtung zur Zyklonabscheidung zu injizieren und derart entworfen ist, dass die injizierte Flüssigkeit eine Flüssigkeitsschicht auf mindestens einem Abschnitt der inneren Wand des Körpers der Vorrichtung zur Zyklonabscheidung bildet.

3. Einrichtung nach Anspruch 2, **dadurch gekennzeichnet, dass** die Vorrichtung zur Injektion von Flüssigkeit (27) ein Nebelgenerator ist, z.B. von Wassernebel, die angeordnet ist, um einen Nebel zu erzeugen und in das Innere des Körpers der Vorrichtung zur Zyklonabscheidung zu injizieren.

4. Einrichtung nach einem der Ansprüche 1 bis 3, **dadurch gekennzeichnet, dass** sie einen ersten Flüssigkeitsstromkreislauf (38) umfasst, in dem eine Wärmeübertragungsflüssigkeit zirkuliert, dass der Körper (22) der Vorrichtung zur Zyklonabscheidung (21) einen Eingang von Wärmeübertragungsflüssigkeit (34) und einen Ausgang von Wärmeübertragungsflüssigkeit (35) umfasst, die mit dem ersten Flüssigkeitsstromkreislauf (38) verbunden sind, und, dass die Vorrichtung zur Zyklonabscheidung (21) ein Abkühlungsrohr (39) umfasst, das im Körper der Vorrichtung zur Zyklonabscheidung (21) angeordnet ist und ein erstes Ende umfasst, das mit dem Eingang von Wärmeübertragungsflüssigkeit (34) verbunden ist, und ein zweites Ende, das mit dem Ausgang von Wärmeübertragungsflüssigkeit (35) verbunden ist.

5. Einrichtung nach Anspruch 4, **dadurch gekennzeichnet, dass** das Abkühlungsrohr (39), das im Inneren des Körpers der Vorrichtung zur Zyklonabscheidung (21) angeordnet ist, die Form einer Rohrschlange aufweist.

6. Einrichtung nach Anspruch 4 oder 5, **dadurch gekennzeichnet, dass** sie erste Heizmittel (8) umfasst, die vorgelagert von den Mitteln zur Querstreckung (15) angeordnet und ausgelegt sind, um die Folie zu erwärmen, wobei die ersten Heizmittel mit dem ersten Flüssigkeitsstromkreislauf (38) verbunden sind.

7. Einrichtung nach Anspruch 6, **dadurch gekennzeichnet, dass** die Wärmeübertragungsflüssigkeit die im ersten Flüssigkeitsstromkreislauf (38) zirkuliert, Wasser ist, und, dass die ersten Heizmittel eine Wanne mit heißem Wasser (8) umfassen, die mit einem Eingangsloch (41) und einem Ausgangsloch (42) ausgestattet ist, die mit dem ersten Flüssigkeitsstromkreislauf (38) verbunden sind.

8. Einrichtung nach einem der Ansprüche 1 bis 7, **dadurch gekennzeichnet, dass** sie Mittel zur Längsstreckung (11) umfasst, die angeordnet sind, um die Folie in der Längsrichtung zu strecken, wobei die Mittel zur Längsstreckung (11) vorzugsweise eine Einheit von Vorheizzylindern (12) und eine Streckgruppe (13) umfassen, die nachgelagert von der Einheit von Vorheizzylindern angeordnet ist und eine Aufeinanderfolge von Streckzylindern aufweist.

9. Einrichtung nach Anspruch 8, **dadurch gekennzeichnet, dass** sie eine Abzugshaube (43) umfasst, die sich mindestens unter Mitteln zur Längsstreckung (11) erstreckt und entworfen ist, um die Umgebungsluft aufzufangen, die mindestens teilweise von den Mitteln zur Längsstreckung erwärmt wurde, und diese Letztere in die Richtung der Mittel zur Querstreckung (15) zu leiten.

10. Einrichtung nach einem der Ansprüche 1 bis 9, **dadurch gekennzeichnet, dass** sie zweite Heizmittel (45) umfasst, die zwischen dem Luftausgangsloch (25) die Vorrichtung zur Zyklonabscheidung (21) und der Lufteingangsöffnung (18) des Gehäuses angeordnet sind, wobei die Heizmittel z.B. einen Gaustauscher oder -brenner umfassen.

11. Einrichtung nach Anspruch 9 und 10, **dadurch gekennzeichnet, dass**: die zweiten Heizmittel, die zwischen dem Luftausgangsloch der Vorrichtung zur Zyklonabscheidung und der Lufteingangsöffnung des Gehäuses angeordnet sind, einen Gasbrenner (45) umfassen, der mit einem Luftkollektor (46) ausgestattet ist, der in einem Bereich der Abzugshaube (43) angeordnet ist, der sich in der Nähe der Mittel zur Querstreckung befindet.

12. Einrichtung nach einem der Ansprüche 1 bis 11, **dadurch gekennzeichnet, dass** sie einen zweiten Flüssigkeitsstromkreislauf (46) umfasst, in dem eine Wärmeübertragungsflüssigkeit zirkuliert, und, dass der Luftrückführungskreislauf (19) mindestens einen Luft/Wärmeübertragungsflüssigkeits-Tauscher (47) umfasst, der zwischen der Luftausgangsöffnung (17) des Gehäuses und der Vorrichtung zur Zyklonabscheidung (21) angeordnet ist, wobei der Tauscher (47) einen Eingang von Wärmeübertragungsflüssigkeit (48) und einen Ausgang von Wärmeübertragungsflüssigkeit (49) umfasst, die mit dem zweiten Flüssigkeitsstromkreislauf (46) verbunden sind.

13. Einrichtung nach Anspruch 12, **dadurch gekennzeichnet, dass** der Tauscher (47) derart konfiguriert ist, dass die Luft, die aus Letzterem austritt, eine Temperatur aufweist, die höher als die Kondensationstemperatur der Zusatzstoffe ist.

14. Einrichtung nach Anspruch 12 oder 13, **dadurch gekennzeichnet, dass** der Tauscher (47) ein Zyklontauscher ist.

15. Einrichtung nach Anspruch 8 und einem der Ansprüche 12 bis 14, **dadurch gekennzeichnet, dass** die Mittel zur Längsstreckung (11) eine Einheit von Vorheizzylindern (12) umfassen und eine Streckgruppe (13), die nachgelagert von der Einheit von Vorheizzylindern angeordnet ist und eine Aufeinanderfolge von Streckzylindern aufweist, und dass der zweite Flüssigkeitsstromkreislauf (46) angeordnet ist, um die Vorheizzylinder (12) der Mittel zur Längsstreckung mit Wärmeübertragungsflüssigkeit zu versorgen.

## Claims

1. An installation (3) for stretching a film made of synthetic material, comprising transverse stretching means (15) arranged to transversely stretch the film, the transverse stretching means including a stretching enclosure (16) in which the film is intended to be stretched, an air outlet opening (17) opening into the enclosure and an air inlet opening (18) opening into the enclosure, wherein the installation of transverse stretching means further includes an air recirculation circuit (19) connecting the air inlet and outlet openings (18, 17) and arranged to redirect the air coming from the air outlet opening towards the air inlet opening, and the air recirculation circuit (19) includes a cyclone separating device (21) comprising a body (22) delimiting a separating chamber (23), an inlet port (24) opening into the separating chamber and connected to the air outlet opening (17) of the enclosure so as to allow the introduction of an air-additives mixture in the separating chamber, an air outlet port (25) opening into the separating chamber and connected to the air inlet opening (18) of the enclosure, and an additives outlet port (26) opening into the separating chamber.

2. The installation according to claim 1, **characterized in that** the cyclone separating device (21) comprises a liquid injection device (27) arranged to inject a liquid inside the body (22) of the cyclone separating device and designed in such a way that the injected liquid forms a liquid layer on at least a portion of the inner wall of the body of the cyclone separating device.

3. The installation according to claim 2, **characterized in that** the liquid injection device (27) is a fog generator, for example water fog generator, arranged to generate and inject a fog inside the body of the cyclone separating device.

4. The installation according to any of claims 1 to 3, **characterized in that** it comprises a first fluid circulation circuit (38) wherein a heat transfer fluid circulates, **in that** the body (22) of the cyclone separating device (21) comprises a heat transfer fluid inlet (34) and a heat transfer fluid outlet (35) connected to the first fluid circulation circuit (38), and **in that** the cyclone separating device (21) comprises a cooling pipe (39) disposed in the body of the cyclone separating device and including a first end connected to the heat transfer fluid inlet (34) and a second end connected to the heat transfer fluid outlet (35).

5. The installation according to claim 4, **characterized in that** the cooling pipe (39) disposed inside the body of the cyclone separating device (21) is in the form of a coil.

6. The installation according to claim 4 or 5, **characterized in that** it comprises first heating means (8) disposed upstream of the transverse stretching means (15) and intended for heating the film, the first heating means being connected to the first fluid circulation circuit (38).

7. The installation according to claim 6, **characterized in that** the heat transfer fluid circulating in the first fluid circulation circuit (38) is water, and **in that** the first heating means include a hot water tank (8) equipped with an inlet port (41) and an outlet port (42) connected to the first fluid circulation circuit (38).

8. The installation according to any of claims 1 to 7, **characterized in that** it comprises longitudinal stretching means (11) arranged to longitudinally stretch the film, the longitudinal stretching means (11) preferably comprising an assembly of preheating rollers (12) and a stretching group (13) disposed downstream of the assembly of preheating rollers and having a succession of stretching rollers.

9. The installation according to claim 8, **characterized in that** it comprises a hood (43) extending at least above the longitudinal stretching means (11) and designed to collect the ambient air heated at least partly by the longitudinal stretching means and direct the latter towards the transverse stretching means (15).

10. The installation according to any of claims 1 to 9, **characterized in that** it comprises second heating means (45) disposed between the air outlet port (25) of the cyclone separating device (21) and the air inlet opening (18) of the enclosure, said heating means including for example an exchanger or a gas burner.

11. The installation according to claims 9 and 10, **characterized in that** the second heating means disposed between the air outlet port of the cyclone separating device and the air inlet opening of the enclosure include a gas burner (45) equipped with an air manifold (46) disposed in an area of the hood (43) located near the transverse stretching means.

12. The installation according to any of claims 1 to 11, **characterized in that** it includes a second fluid circulation circuit (46) wherein a heat transfer fluid circulates, and **in that** the air recirculation circuit (19) includes at least one air/ heat transfer fluid exchanger (47) disposed between the air outlet opening (17) of the enclosure and the cyclone separating device (21), the exchanger (47) including a heat transfer fluid inlet (48) and a heat transfer fluid outlet (49) connected to the second fluid circulation circuit (46).

13. The installation according to claim 12, **characterized in that** the exchanger (47) is configured in such a way that the air exiting from the latter has a temperature higher than the condensing temperature of the additives.

14. The installation according to claim 12 or 13, **characterized in that** the exchanger (47) is a cyclonic exchanger.

15. The installation according to claim 8 and any of claims 12 to 14, **characterized in that** the longitudinal stretching means (11) comprise an assembly of preheating rollers (12) and a stretching group (13) disposed downstream of the assembly of preheating rollers and having a succession of stretching rollers, and **in that** the second fluid circulation circuit (46) is arranged to supply the preheating rollers (12) of the longitudinal stretching means with heat transfer fluid.
